Europäisches Patentamt

European Patent Office

Office européen des brevets

(19)

(11) Numéro de publication : **0 516 539 A1**

# (12) DEMANDE DE BREVET EUROPEEN

(21) Numéro de dépôt : **92401455.8**

(22) Date de dépôt : **27.05.92**

(51) Int. Cl.⁵ : **B65G 47/64,** B07C 3/06, B65H 29/58

(30) Priorité : **30.05.91 FR 9106502**

(43) Date de publication de la demande :
**02.12.92 Bulletin 92/49**

(84) Etats contractants désignés :
**AT BE CH DE DK ES FR GB GR IT LI NL PT SE**

(71) Demandeur : **BERTIN & CIE**
**59, Rue Pierre Curie Z.I. des Gâtines**
**F-78373 Plaisir Cedex (FR)**

(72) Inventeur : **Roch, Jean**
**Route des Putis, Chemin du Renard**
**F-13109 Simiane Collongue (FR)**

(74) Mandataire : **Colas, Jean-Pierre et al**
**Cabinet de Boisse 37, avenue Franklin D.**
**Roosevelt**
**F-75008 Paris (FR)**

(54) Dispositif pour déplacer une pièce mobile entre une première et une seconde positions et la maintenir dans chacune de ces positions.

(57) Dispositif pour déplacer une pièce mobile (1), et en particulier une pièce d'aiguillage dans une installation de tri postal, entre une première et une seconde positions, et la maintenir dans chacune de ces positions, le dispositif comprenant un moyen élastique, de préférence un ressort à lame (3) en matériau composite à inertie, qui passe entre les deux positions par un point de contrainte maximale, où l'équilibre est instable, sous l'action de moyens d'actionnement qui soient capables de l'amener à proximité de ce point par une phase d'armement suivie d'une phase d'arrêt et d'une phase de détente déclenchée au moment désiré.

FIG.:1

EP 0 516 539 A1

La présente invention est relative à un dispositif pour déplacer une pièce mobile entre une première et une seconde positions, et la maintenir dans chacune de ces positions, le déplacement étant aussi rapide que possible.

La présente invention résulte de recherches pour l'amélioration du matériel de tri postal. Une installation de tri postal comporte des moyens pour faire circuler des lettres à partir d'un point d'origine unique en direction d'un nombre variable de cases, correspondant chacune à une destination définie. Un certain nombre d'aiguillages permet l'acheminement des lettres vers la direction désirée. Ces aiguillages comprennent normalement un volet mobile, qui doit pouvoir être maintenu dans l'une ou l'autre de deux positions fixes, et passer de l'une à l'autre de ces positions, voir par exemple FR-A-2.196.641. On conçoit que la vitesse à laquelle le volet mobile passe d'une position à l'autre conditionne les performances de tout l'ensemble du système. Il est donc un besoin pour un dispositif permettant le passage rapide d'une position à l'autre du volet d'aiguillage, celui-ci étant maintenu de façon sûre dans chacune des deux positions, de façon à aiguiller sûrement les lettres dans la bonne direction.

L'intervalle entre deux lettres successives, et leur vitesse de déplacement, déterminent le temps maximal dont on dispose pour opérer le changement de position du volet. Ce temps est normalement nettement plus faible que celui qui correspond au passage d'une lettre dans l'aiguillage. En effet, si l'aiguillage peut commencer à se déplacer avant la fin du passage d'une lettre, cela ne doit correspondre qu'à une partie réduite du passage de la lettre la plus courte. L'essentiel de la manoeuvre doit correspondre à l'intervalle entre deux lettres.

On a pensé à utiliser des dispositifs à accumulation d'énergie, cette énergie se libérant au moment du changement de position. On évite ainsi d'avoir un matériel de grande puissance, utilisé seulement pendant une partie très réduite du temps, car l'énergie peut être accumulée pendant le temps qui précède ce changement. On connaît déjà des systèmes à accumulation d'énergie et libération brusque de celle-ci, par exemple par mise sous contrainte puis détente d'un ressort. Un exemple particulier se trouve dans les interrupteurs électriques, dans lesquels on recherche, en particulier pour la coupure d'un circuit, à ce que les contacts électriques s'éloignent le plus rapidement possible l'un de l'autre pour limiter l'apparition d'arcs et d'étincelles. Il existe, dans ce domaine, un grand nombre de types d'interrupteurs, et, même dans les interrupteurs à usage domestique, on rencontre des dispositifs dans lesquels, par exemple, on comprime un ressort pendant une course d'approche, l'énergie accumulée pendant la course d'approche étant ensuite utilisée à écarter rapidement l'une de l'autre les contacts électriques, voir par exemple GB-A-1.578.274.

On a aussi proposé d'appliquer ce principe pour diriger à volonté des feuilles de papier, arrivant de façon successive, dans deux directions différentes, voir US-A-4.721.298.

Le problème rencontré dans les installations de tri postal est différent de celui de commander la direction de feuilles de papier successives, car le moment du déclenchement doit être déterminé avec une grande précision. Il ne suffit donc pas que le changement de position se fasse très rapidement, il faut encore qu'il se produise seulement au moment voulu.

Pour obtenir ce résultat, l'invention fournit un dispositif pour déplacer une pièce mobile entre une première et une seconde positions et la maintenir dans chacune de ces positions, ce dispositif agissant par détente d'un moyen élastique qui est dans une première situation quand la pièce mobile est dans la première position, et dans une seconde situation quand la pièce mobile est dans la seconde position, et qui passe par un premier point de contrainte maximale quand il est déplacé de la première situation vers la seconde situation, et par un second point de contrainte maximale quand il est déplacé de la seconde situation vers la première, la détente qui fait passer la pièce mobile d'une position à l'autre se produisant à peu près immédiatement après que le moyen élastique a dépassé le point de contrainte maximale, le dispositif comportant en outre des moyens d'actionnement pour déplacer lesdits moyens élastiques entre les première et seconde situations,

ce dispositif ayant pour particularité que lesdits moyens d'actionnement sont capables d'immobiliser le moyen élastique de façon durable très peu avant le point de contrainte maximale, et de lui faire passer ce point pour déclencher la détente au moment désiré.

La première et la seconde situation peuvent être des situations d'équilibre stable, c'est-à-dire des situations vers lesquelles le système tend à revenir s'il en a été écarté d'une petite quantité. Le premier et le second points de contrainte maximale sont des situations d'équilibre instable, dont le système tend à s'éloigner s'il en a été faiblement écarté. On appelle "armement" l'action qui fait passer le système de la première, ou la seconde, situation jusqu'au voisinage du premier, ou respectivement du second, point de contrainte maximale, avec un apport d'énergie relativement important et pendant un temps relativement long. On appelle "détente" l'action qui fait dépasser au système le premier ou le second point de contrainte maximal pour aller jusqu'à respectivement la seconde ou la première situation. La détente exige un apport extérieur d'énergie faible, l'essentiel de l'énergie nécessaire ayant été accumulé dans le moyen élastique pendant l'armement. Le temps de détente peut être court, et l'instant du début de la détente doit être déterminé avec une grande précision.

Pour immobiliser le moyen élastique, c'est-à-dire tout le système, après l'armement et en attendant le signal de détente, on peut utiliser un ensemble moteur-réducteur qui est bloqué dès lors que le moteur n'est plus alimenté. On préfère utiliser un moteur pas-à-pas couplé avec un entraînement non réversible, du type vis et écrou par exemple.

De cette façon, il n'y a pas lieu de craindre qu'un choc ou une secousse, subi par la pièce mobile ou le moyen élastique, provoque une détente prématurée et non désirée.

Avantageusement, le moyen élastique comprend un ressort à section variable et inertie constante, en matériau composite, tel que décrit dans le brevet EP-A-0093707. Un tel ressort présente en effet des propriétés intéressantes d'amortissement interne. Ce ressort est décrit dans la suite comme "ressort à lame". Il peut être également constitué d'une lame métallique également désignée par "ressort à lame".

Le ressort à lame est déformé en forme de S au voisinage de chaque point de contrainte maximale.

Avantageusement, le ressort à lame comprend une partie principale, qui est fixée par une de ses extrémités sur la pièce mobile et dont l'autre extrémité est susceptible de pivoter autour d'un axe fixe, et une partie de stabilisation, dont une extrémité est solidaire de la partie principale seulement au voisinage dudit axe fixe, et dont l'autre extrémité prend appui sur un point fixe, cette partie de stabilisation ayant, entre ses deux extrémités, une extension à peu près moitié de celle de la partie principale.

Suivant une autre modalité avantageuse, le moyen élastique comprend une pièce élastique en matériau composite.

L'invention va maintenant être exposée de façon plus détaillée à l'aide d'exemples pratiques illustrés avec les dessins, parmi lesquels :

Figure 1 est un schéma montrant quatre positions successives d'une pièce mobile entraînée par un ressort conformément à l'invention,

Figure 2 est un schéma analogue à la figure 1, et montrant quatre phases successives du même dispositif au cours d'un déplacement "retour",

Figure 3 est une vue schématique en perspective d'un ensemble d'aiguillage pour lettres conforme à la présente invention, dans quatre positions correspondant à celle de la figure 2,

Figure 4 est une figure analogue à la figure 3 et montrant les positions successives d'une variante avec stabilisateur.

Figure 5 est une vue en perspective d'une variante préférée de réalisation d'aiguillage dans laquelle le ressort à lame est du type décrit dans le document EP-A-0093707.

Figure 6 est une vue de face montrant une disposition à deux ressorts à lame.

Figure 7 est une vue schématique, en bout d'axes de la variante de la figure 6, dans trois situations.

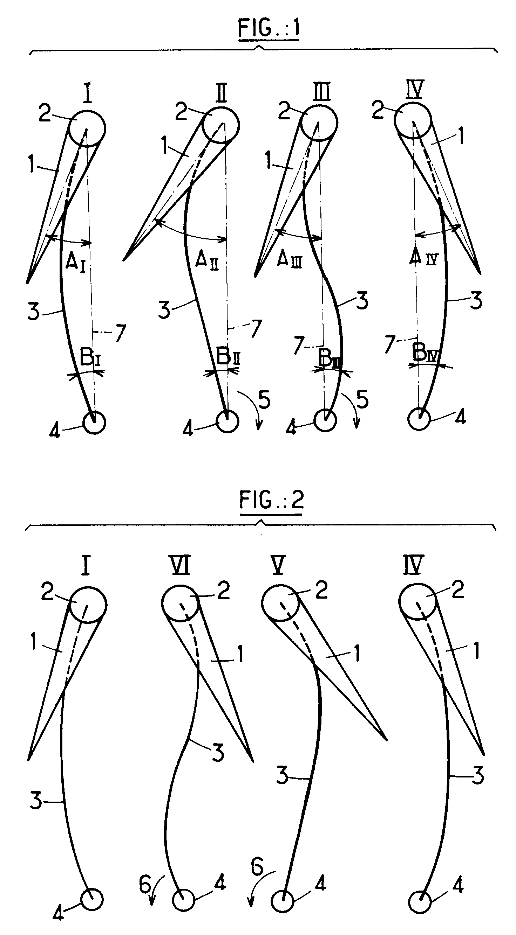

Les figures 1 et 2 montrent une pièce mobile 1, montée, sans possibilité de rotation, sur un pivot 2. Une lame de ressort 3 est fixée, également sans possibilité de rotation, sur le pivot 2. Le pivot 2, lui-même, peut tourner librement autour de son axe. L'extrémité opposée de la lame de ressort 3 est montée, sans possibilité de rotation, sur un second pivot 4, que des moyens d'entraînement peuvent faire tourner dans un sens, indiqué par la flèche 5, dans le cas de la figure 1, et dans le sens opposé, flèche 6, dans le cas de la figure 2.

La lame de ressort 3 est d'une longueur un peu supérieure à celle qui sépare les axes des pivots 2 et 4. Sur les figures 1 et 2, on a représenté le plan médian de la pièce 1 comme tangent à la lame 3 où elle rejoint le pivot 2. Cependant, cette situation n'a rien d'obligatoire. Les angles que fait la tangente à la lame 3 avec la droite 1 qui joint les axes des pivots sont désignés par $A_I$, $A_{II}$ etc.. pour les angles dont le sommet est sur l'axe du pivot 2, et par $B_I$, $B_{II}$, etc.., pour les angles dont le sommet est sur l'axe du pivot 4.

Dans la situation I de la figure 1, aucune force n'est exercée sur les pivots 2 et 4, si bien que la lame 3 a une configuration en arc de cercle, et les angles $A_I$, $B_I$ sont d'égale valeur. Dans la position II de la figure 1, on a exercé sur le pivot 4 un couple de rotation selon la flèche 5, de telle façon que l'angle dont le sommet est sur l'axe du pivot 4 a pris une valeur $B_{II}$. La conservation de la longueur de la lame de ressort fait que l'angle opposé $A_{II}$ est légèrement augmenté par rapport à $A_I$.

Dans la situation représentée en III, l'effort exercé selon la flèche 5 a continué, si bien que l'angle $B_{II}$ a été remplacé par un angle $B_{III}$ de sens inverse, c'est-à-dire que l'extrémité de la lame 3 a traversé la droite 7. Cependant, l'autre extrémité de la lame 3 n'a que légèrement bougé, non plus que le pivot 2 et la pièce mobile 1. L'angle $A_{III}$ est sensiblement égal à $A_I$. La lame 3 présente, par conséquent, une forme en S avec un point d'inflexion. On conçoit qu'une continuation relativement faible de l'effort selon la flèche 5 déplacera le point d'inflexion de la lame 3 en direction du pivot 2, et que, lorsque ce point d'inflexion atteindra ce pivot, le déclenchement aura lieu, et le dispositif prendra la disposition représentée en IV, où la lame 3 est toute entière du côté de la droite 7 qui est à l'opposé de la position initiale $A_I$. Le pivotement de la pièce 1 correspond à un angle total égal à $A_I + A_{IV}$ sensiblement égal à $2 \times A_I$.

La figure 2 montre la succession d'étapes IV, V, VI, I qui correspond à une rotation du pivot 4 selon la flèche 6, c'est-à-dire en sens inverse de ce qui est représenté à la figure 1. La position initiale, dans ce cas, est la position IV, et la position finale est la position I. Les positions intermédiaires V et VI, sont, cependant, différentes des positions III et II respectivement. Les figures 1 et 2 se déduisent l'une de l'autre par symétrie dans un miroir.

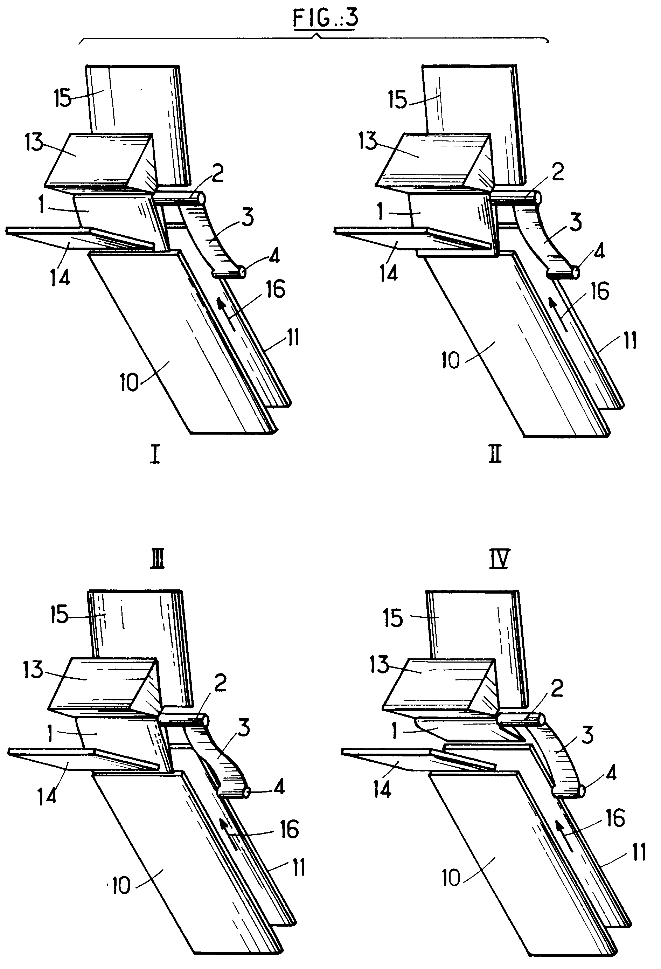

La figure 3 montre l'ensemble d'un dispositif d'aiguillage selon l'invention, dans des états successifs correspondant aux positions I, II, III, IV de la figure 1. La voie d'acheminement des lettres L est schématisée par deux plaques parallèles 10, 11, et les voies de départ des lettres sont représentées par l'intervalle entre un bloc 13 à section à peu près triangulaire, et de plaques 14, 15, parallèles chacune à une des faces du bloc 13. Les deux faces actives du bloc 13 convergent sur l'axe du pivot 2, solidaire de la pièce d'aiguillage 1 et d'une extrémité du ressort 3. L'autre extrémité du ressort 3 est portée par le pivot 4. La flèche 16 symbolise la direction d'arrivée des lettres. On comprend aisément, à la lecture de ces figures, que dans les positions I, II et III, les lettres sont aiguillées pour passer entre le bloc 13 et la plaque 15, alors que dans la position IV, la pièce d'aiguillage 1 a basculé, si bien que les lettres sont envoyées entre la plaque 14 et le bloc 13.

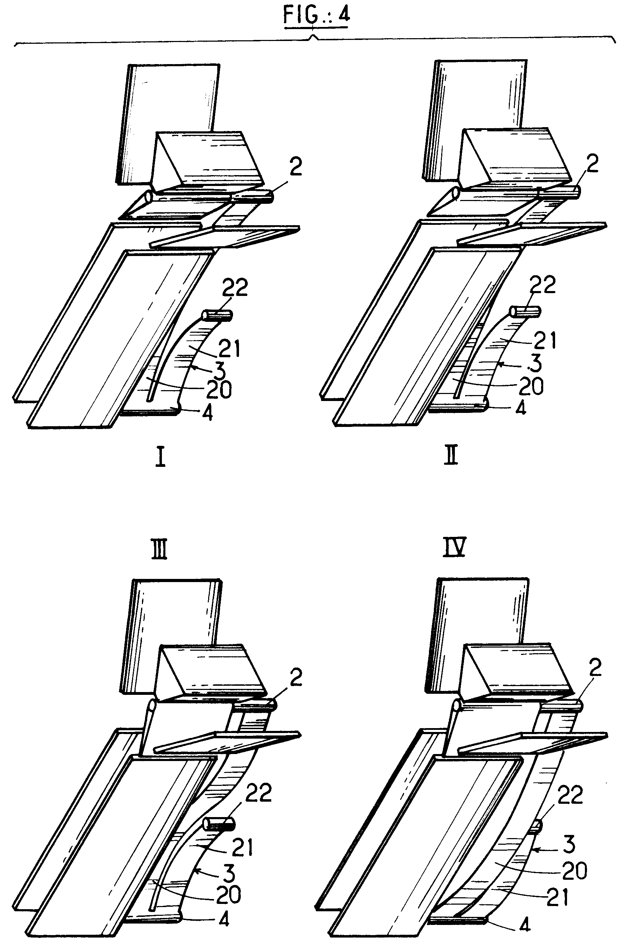

La figure 4 est analogue à la figure 3, la seule différence portant sur la structure du ressort 3. Celui-ci comprend une partie principale 20, qui, comme précédemment décrit, s'étend entre le pivot 2 et le pivot 4, et une partie stabilisatrice 21, parallèle à la partie principale 20, mais de longueur sensiblement moitié, et qui s'étend entre le pivot 4 et un pivot auxiliaire 22 situé dans le plan défini par les axes des pivots 2 et 4. La partie stabilisatrice 21 est solidaire du pivot 4, comme la partie 20, si bien que la rotation du pivot 4 entraîne simultanément le pivotement de l'extrémité des parties 20 et 21. La longueur de la partie 21 est supérieure à la distance entre les pivots 4 et 22, de la même façon que la longueur de la partie 20 est supérieure à la distance entre les pivots 4 et 2. Cependant, l'excès de longueur de la partie 21 est, en proportion, supérieur à l'excès de longueur de la partie 20, si bien que, comme on peut le constater, dans la position III, la partie 20 a déjà pris une forme en S, alors que la partie 21 présente encore une courbure unique. Il en résulte un effet stabilisateur, une force plus importante est nécessaire au moment du déclenchement, pour passer de la position III à la position IV.

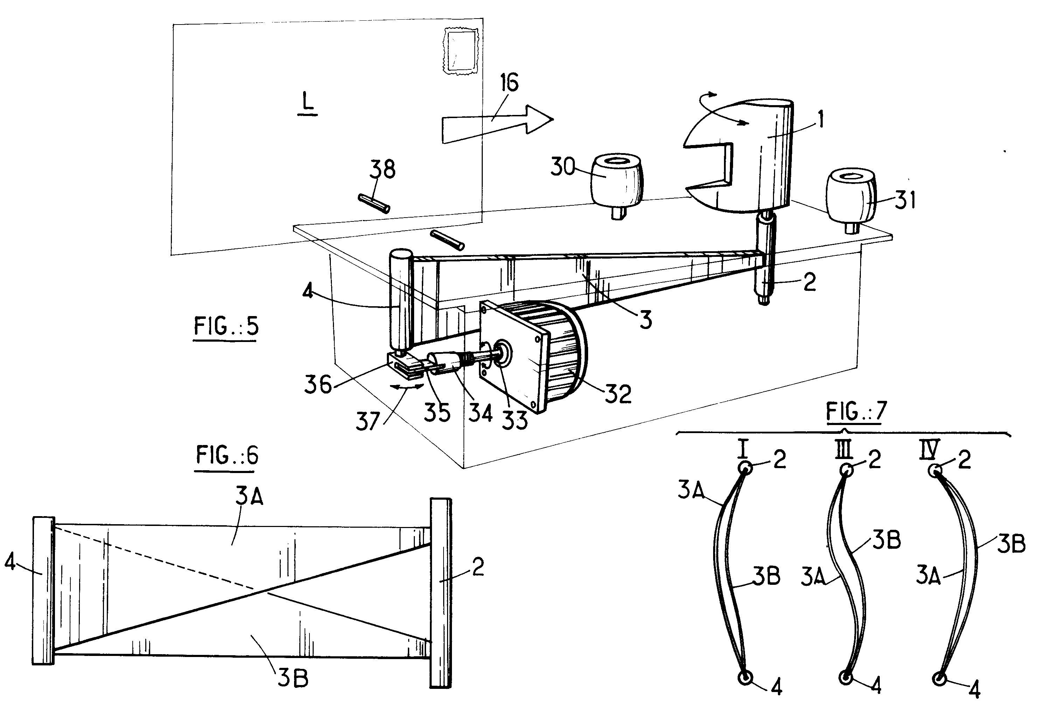

On retrouve, à la figure 5, un volet d'aiguillage 1 monté sur un pivot 2, pour dévier des lettres L arrivant dans la direction de la flèche 16, à l'aide de galets de guidage 30, 31.

Le ressort à lame 3 est une pièce en matière composite, du type verre/époxy, à fibres longues unidirectionnelles non croisées, qui présente une grande résistance à la rupture et une très bonne tenue à la fatigue. De telles lames ont une capacité spécifique d'emmagasinage d'énergie 4 à 5 fois supérieure à celle de l'acier. Le ressort à lame, dans un exemple, est à inertie évolutive : sa hauteur passe de 50 à 10 mm, pendant que son épaisseur varie de 0,8 à 4 mm, pour une longueur de 180 mm.

Le ressort à lame est ancré, par une de ses extrémités, dans une fente du pivot 2, et par l'autre extrémité dans une fente du pivot 4.

Dans une variante, représentée aux figures 6 et 7, on utilise deux ressorts à lame (3A, 3B) ancrés dans les pivots 2 et 4 avec un léger décalage angulaire, ce qui améliore la stabilité dans la phase d'arrêt.

Un moteur 32 pas-à-pas à double sens possède un arbre fileté 33, qui pénètre dans une pièce filetée femelle 34, formant écrou, reliée sans rotation possible à une plaquette 35 maintenue dans une chape 36 solidaire du pivot 4. On conçoit que la rotation du moteur entraîne un déplacement axial de la pièce 34, ce qui provoque la rotation du pivot 4 sur son axe, et fait passer le ressort 3 d'une première situation, d'équilibre stable, à une deuxième situation, également d'équilibre stable, selon la flèche à double sens 37, en passant par les phases d'armement, d'arrêt et de détente. Un capteur optique 38 détecte le bord avant d'une lettre L arrivant, et commande, par des moyens non représentés, la rotation du moteur pour le début de la phase de détente, si un changement de position du volet 1 est nécessaire.

On pourrait remplacer l'ensemble moteur pas-à-pas, pièce filetée, plaquettes 32, 33, 24 qu'on vient de décrire par un moteur continu muni d'un réducteur attaquant directement la chape 36 ou même le pivot 4.

On observera que le dispositif de l'invention peut également fonctionner suivant le mode plus classique, où la détente suit immédiatement l'armement, l'arrivée d'une lettre, ou autre objet déterminant, le début de la succession de ces deux phases.

**Revendications**

1. Dispositif pour déplacer une pièce mobile (1) entre une première et une seconde positions et la maintenir dans chacune de ces positions, ce dispositif agissant par détente d'un moyen élastique (3) qui est dans une première situation quand la pièce mobile est dans la première position, et dans une seconde situation quand la pièce mobile est dans la seconde position, et qui passe par un premier point de contrainte maximale quand il est déplacé de la première situation vers la seconde situation, et par un second point de contrainte maximale quand il est déplacé de la seconde situation vers la première, la détente, qui fait passer la pièce mobile d'une position à l'autre se produisant à peu près immédiatement après que le moyen élastique (3) dépasse le point de contrainte maximale, le dispositif comportant en outre des moyens d'actionnement pour déplacer lesdits moyens élastiques entre les première et seconde situations,

   caractérisé en ce que lesdits moyens d'actionnement sont capables d'immobiliser le moyen élastique (3) de façon durable très peu avant le point de contrainte maximale, et de lui faire passer ce point pour déclencher la détente au moment désiré.

2. Dispositif selon la revendication 1, caractérisé en ce que lesdits moyens d'actionnement sont de nature irréversible.

3. Dispositif selon la revendication 2, caractérisé en ce que lesdits moyens d'actionnement irréversibles comprennent un entrainement par vis (33) et écrou (34).

4. Dispositif selon la revendication 3, caractérisé en ce que lesdits moyens d'actionnement irréversibles comprennent un moteur pas-à-pas.

5. Dispositif selon l'une des revendications 1 à 4, caractérisé en ce que le moyen élastique comprend un ressort à lame, dont les extrémités sont solidaires l'une d'un premier pivot (2) lié à la pièce mobile (1), et l'autre d'un second pivot ((4) solidaire de moyens d'entraînement et parallèle au premier pivot, le ressort étant déformé en forme de S au voisinage de chaque point de contrainte maximale.

6. Dispositif selon la revendication 5, caractérisé en ce que le ressort à lame (3) est une pièce en matériau composite, à inertie évolutive, à fibres longues unidirectionnelles non croisées.

7. Dispositif selon la revendication 6 caractérisé en ce que le matériau composite est du type polyester/époxy.

8. Dispositif selon la revendication 5, caractérisé en ce que le ressort à lame comprend une partie principale, qui est liée par une de ses extrémités à la pièce mobile et dont l'autre extrémité est liée au second pivote (4), et une partie de stabilisation, solidaire de la partie principale seulement au voisinage dudit second pivot, et dont l'autre extrémité prend appui sur un point fixe, cette partie de stabilisation ayant, entre ses deux extrémités, une extension à peu près moitié de celle de la partie principale.

9. Dispositif selon l'une des revendications 5 à 8, caractérisé en ce que le moyen élastique comprend deux ressorts à lame (3A, 3B), disposés en parallèle entre les deux pivots.

10. Dispositif selon l'une des revendications 1 à 9, caractérisé en ce que la pièce mobile (1) est un volet d'aiguillage dans une station de tri postal, et les moyens d'actionnement sont commandés pour déclencher la détente à l'arrivée du bord avant d'une lettre (L) en un point déterminé à l'avance.

FIG.:1

FIG.:2

FIG.:3

I

II

III

IV

## FIG.: 4

I

II

III

IV

FIG.:5

FIG.:6

FIG.:7

EP 0 516 539 A1

Office européen des brevets **RAPPORT DE RECHERCHE EUROPEENNE**

Numero de la demande

EP 92 40 1455

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 578 274 (STANDARD TELEPHONES AND CABLES LIMITED) <br> * le document en entier * <br> --- | 1,5 | B65G47/64 <br> B07C3/06 <br> B65H29/58 |
| A | US-A-4 721 298 (PITCHER) <br> * le document en entier * <br> --- | 1,10 | |
| A | FR-A-2 196 641 (KLEINDIENST) <br> * le document en entier * <br><br> ----- | 1,10 | |

**DOMAINES TECHNIQUES RECHERCHES (Int. Cl.5)**

B65G
B07C
B65H
G06K
G06M
F16F
H01H

Le présent rapport a été établi pour toutes les revendications

| Lieu de la recherche | Date d'achèvement de la recherche | Examinateur |
|---|---|---|
| LA HAYE | 04 SEPTEMBRE 1992 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10